# EUROPEAN PATENT SPECIFICATION

(11) **EP 3 629 308 B1**
(45) Date of publication and mention of the grant of the patent: **20.08.2025**
(21) Application number: 18196687.0
(22) Date of filing: 25.09.2018
(51) Int. Cl.: H04L 9/32, G07C 13/00

(54) **IMPROVED SYSTEM AND METHOD FOR ELECTRONIC VOTING**
VERBESSERTES SYSTEM UND VERFAHREN ZUR ELEKTRONISCHEN ABSTIMMUNG
SYSTÈME AMÉLIORÉ ET PROCÉDÉ DE VOTE ÉLECTRONIQUE

(43) Date of publication of application: 01.04.2020
(73) Proprietor: Node A Consulting GmbH, 82031 Grünwald (DE)
(72) Inventor: Wesby, Philip, 43539 Mölnlycke (SE)
(74) Representative: Gigerich, Jan

(56) References cited:
- US-A1- 2009 076 891
- US-A1- 2014 089 062

## Description

### BACKGROUND OF THE INVENTION

The invention relates to an improved system and method for electronic voting which provides a secure solution for voting using an installed pre-registered e-voting software-App on a multimedia device, which securely communicates with an electoral registration office server and an electronic election office server.

Today, no electronic voting systems are in widespread use. Many solutions have been proposed but they have never been fully developed because they either involve complex encoded messages, which are too processor-intensive for current devices to compute, or they are vulnerable to hacking and deemed insecure and unviable. The challenge is that the voting transaction must be secure and anonymous. The voter must be a legitimate identifiable person of voting age and eligible to vote, and the vote must remain secret until counted, but moreover, there must never be any connection between the voter and the vote they make, both during and after the election.

An electronic voting system is highly desirable because it makes possible a voting system which is accessible to everyone with a multimedia device, such that higher numbers of voters can vote, and will be encouraged to vote. Often, voters weigh up the inconvenience of travelling to a polling station with identification, finding a place to park, waiting in line before they can vote. A reliable and secure electronic voting system removes this inconvenience such that their vote is only a few clicks away using their multimedia device.

A fundamentally important aspect about electronic voting is that it emphasizes democracy, by making voting easier and more accessible, such that the result of an election is likely to be more demographically represented since the inconvenience barrier to overcome to vote is substantially reduced and a much higher number of people will participate. Furthermore, postal votes become obsolete, since the voters may vote from anywhere at the day of the election, so that every voter may take into consideration even last minute events, which would otherwise not be possible.

The administrative cost to the taxpayer of general elections today using a paper ballot and a national network of ballot stations is high. Depending upon the population of the country, not including any marketing or campaign costs, the administrative cost typically exceeds €4 per voter: the 2010 UK national election cost €125 million, while the 2015 UK EU election cost €160 million. A recent political party poll in 2018, to Labour party members in Germany asking whether they agreed to form a coalition, also exceeded €4 per voter for 380,000 voters to participate. Clearly, a viable and secure electronic voting system offers substantial savings to the taxpayer, and also to political parties.

An improved system, method and computer program for electronic voting is needed which provides a secure and reliable means to vote using a multimedia device, which communicates securely both with an electoral voting office server to authenticate and register a voter for eligibility in an election, and anonymously with an electronic election office server for participation in an election. The key requirement for such a system is the absolute capability to both identify and authenticate a person's right to vote, and the provision of a voting mechanism which remains anonymous yet secure and incapable of being hacked by any third party. Such a solution must isolate the identity of the voter from the vote being cast, yet be able to validate and authenticate that the anonymous voter is indeed allowed to vote, while determining absolutely that each voter only votes once in an election independent of the multimedia device he or she may use. This aspect is not present in the prior art. The invention is a technical improvement over the prior art and provides a method to solve the aforementioned prior art problems.

The invention addresses the problems of the prior art by managing the electronic voting transactions in such a way that the electronic voter remains anonymous from the electronic election office server, by enabling the user to request an electronic ballot from the electronic election office using a multimedia e-voting software-App, which hides the identity of the voter from the electronic election office yet provides the mean for the election office to verify the authenticity of the voter. The key to this solution is the unique identity of each hardware device and the unique identity of each software-App.

In general, all multimedia devices comprise hardware identity information. For example, mobile network devices use SIM cards which comprise unique ID codes such as the PUK code. Wi-Fi wireless devices all have unique hardware MAC addresses, and hardware processing chips comprise unique ID codes, both of which may be read by software. There are many identity codes within a device, which can uniquely identify the multimedia device which a user is using.

Software applications can be uniquely locked to a multimedia device when they are installed, for example by using a one-time use installation password. Once a software application is installed using this password and registered, it may not be transferred to operate on any other device.

In the field of secure data servers, dedicated servers capable of securely managing registration of legitimate voters do not generally exist, although databases with substantial personal information do exist such as health data records, and personal banking data records, and social security data records.

In the evolving *Internet-of- Things (IOT),* an increasing number of autonomous systems are being developed which incorporate server-based application management. This invention describing an improved system and method for Internet access age verification builds upon a core aspect of EP 1,506,667 B1 in which consumer devices and their operation are managed by server platform software applications.

With the growing number of instances of security breaches of systems storing confidential personal data, many consumers are getting increasingly concerned about adopting services which demand storing their confidential data. Moreover, this confidential data is often retained by the service companies, and used to improve their service provision, and or sold to third party companies for marketing purposes. The invention requires the use of a secure server, similar to one described in a previous patent application to the same inventor, entitled Improved System and Method for Internet Access Age-Verification, EP 18176005.9, filed June 5, 2018.

US 2009/0076891 A1 describes an apparatus for executing a trusted electronic voting system under the control of an election authority comprising at least one electronic voting machine, an election configuration for the voting machine in the electronic voting system, and a trusted computing platform for the voting machine in the electronic voting system.

US 2014/0089062 A1 describes a voting system based on smart mobile communication devices. It comprises at least one smart mobile communication device, at least one server device, a client module, and a server module. The client module is installed on the smart mobile communication device and it is used for temporarily saving the voter's information, submitting identity verification request, showing voting inquiries, and submitting votes. The server module is installed on the server device and it is used for storing the voter's information, verifying the voter's registration and identity, issuing and verifying the voting certificate, creating and publishing the voting affair, and calculating and publishing the voting contents statistics. The client module and the server module perform digital communications through a mobile communication network. The invention also provides a voting method based on smart mobile communication device.

There is a growing concern among consumers about the use of their personal data. Generally, service providers demand this confidential data to verify one or more of the following:
1. the identity of a consumer using their service,
2. the email address where a consumer may be contacted,
3. the postal address where a consumer may be found,
4. the telephone number of the consumer,

Any acceptable electronic voting system must address all the problems of the prior art systems by maintaining anonymity of a voter by isolating personal identity data, which is required by an electoral registration office server in order to determine that a person is authenticated and of legal age to register for an election, from the electronic election office server.

Generally, persons will be registered to vote when they register to live in a certain area. The initial registration process is done once and in person, and done each time they change their place of residence, in the instance it is in a different voting area. In many cases it is anticipated that each eligible voter will also receive a voting card mailed to their home address, with instructions how to download the e-Voting software-App and register their multimedia device. The card may have a 2-dimensional bar code, which when captured, links the device to the download site. The same voting card may be used in the same way as before, should the voter choose to go to the polling station and vote in person. Fewer polling stations will be required in each populated area, as more persons choose to vote electronically.

The electronic election office server only needs to verify, using a secure and authentic means, that the voter is genuine and registered to vote, such that he or she may be sent an electronic ballot to participate in the election. The electronic election office server does not need, and must not receive, any personal identity data which links a voter with the actual voting choice made. According to the invention, the electoral registration office server provides an isolated and independent means for the electronic election office server to verify securely that an anonymous voter is legitimate and may vote. In an ideal solution, the electoral registration office server is not sent, and may not store, any data about the actual voting transaction made in an election. This guarantees that third parties may not ever access or misuse such data for targeted marketing purposes which would be an invasion of privacy.

In summary, an improved system, method and computer program for electronic voting is needed which is anonymous, which enables an electronic election office server to verify securely that a voter is legitimately registered to vote and that the voter only makes one vote, and that the voter has not voted before. Only one software-App may be registered on one multimedia device such that any attempt by any individual to register a second device results in the voting server identifying the transaction as invalid and ignoring the attempt. The invention provides a means to vastly increase voting numbers by reducing the inconvenience of a manual paper vote requiring individuals to journey to a polling station.

Today, governments and political parties are concerned with the growing administrative costs of general elections, and often choose not to consult the people on many issues due to the substantial cost and organization involved in a manual paper ballot. The provision of an electronic voting solution would make such direct involvement of the voting population easy and very cost effective to the extent that this solution may radically change the way populations interact with their governments. Today, while political parties may independently decide on funding of internal members ballots, the choice to hold national elections carries a significant cost to taxpayers.

While the embodiments of the invention are directed towards providing a safe and secure system, method and computer program for electronic voting, the invention is also directly applicable to a wide range of electronic voting applications such as multimedia broadcast consumer polls on people's views on different issues, and product preferences. This capability of the electronic voting platform to facilitate such an immediate and potentially significant reaction to a wide range of diverse issues, offers substantial savings to conduct marketing campaigns, wherein consumers will be more encouraged to participate knowing that their choices remain anonymous. In particular, in the context of a political election, the embodiments make reference to an electoral registration office server and to an electronic election office server while in different contexts the two-server system may comprise an equivalent registration server [S1] and election server [S2] directed to support polls of consumer products or services, either run nationally or privately by commercial companies.

It is thus towards the creation of an advanced and improved system, method for electronic voting, which comprises technological improvements over prior art systems, and which has the capability to allow a voter to remain anonymous while requesting to participate in a particular vote. The invention provides a secure and authentic means for an electronic election office server to communicate with an electoral registration office server to determine that the anonymous voter is a legitimate voter, wherein no confidential personal data is transmitted to the electronic election office server, and wherein no voting data is transmitted to the electoral registration office server.

### ASPECTS OF THE INVENTION

The scope of the invention is defined by the appended claims. Accordingly, it is an aspect of the present invention to provide an improved system and method for electronic voting, which securely determines that a voter is legitimately registered, by providing the means for an electronic voting transaction server, such as an electronic election office server [S2], to verify the authenticity of an anonymous voter by communicating with a legitimate voter registration server, such as an electronic electoral office server [S1], through a software application installed on the user's smart phone or multimedia device, wherein no confidential personal identity data is transmitted to the electronic election office server [S2], and wherein no voting data is transmitted to the electoral office server [S1].

It is a further aspect of one embodiment of the present invention to provide an improved system, method for electronic voting, wherein a software application is installed securely on a user's smart phone or multimedia device, which manages the communications between an electronic election office server [S2] and an electoral office server [S1] to enable a user [User-A] to register for and be authenticated to vote in an election, wherein the user remains anonymous to the electronic election office server [S2] by communicating with the server S2 anonymously, and wherein the identity of the smart phone or multimedia hardware device is not transmitted to the electronic election office server [S2] by providing a derivative of the hardware device identity to server S2, and wherein the software application is able to authenticate the electronic election office server [S2], and provide the means for the server S2 to communicate through the software application with the electoral office server [S1] in order to verify that the anonymous voter [User-A] is authenticated and a genuine voter, and that the voter is communicating using an authenticated registered software application, and via an authenticated smart phone or multimedia device which is identified as registered to the authenticated user.

It is a further aspect of one embodiment of the present invention to provide an improved system, method for electronic voting wherein the electronic election office server [S2] communicates with the electoral registration office server [S1] to obtain the public key of server S1 so that communications signed with the private key of server S1 can be verified by server S2.

It is a further aspect of one embodiment of the present invention to provide an improved system, method for electronic voting, wherein a voter whose identity is registered with an electoral registration office server [S1], installs an e-voting software application (App) on their smart phone or multimedia device using a one-time password, and wherein the software application is registered to one unique smart phone or multimedia device hardware identity (HW-ID) such that the software application identity (App-ID) together with a derivative of the device identity, are uniquely identifiable as being associated with one unique user (User-A), and wherein by registering the software application and a derivative of the device identity App-ID1(HW-ID) with the electoral registration office server [S1] using the true identity of the voter already registered with the electoral registration office server (User-A), the server S1 is able to authenticate and store and validate that the combined software and hardware identity App-ID1(HW-ID) is uniquely associated with an authenticated user who has been authenticated and determined eligible to vote (User-A).

It is a further aspect of one embodiment of the present invention to provide an improved system, method for electronic voting, wherein the electoral registration office server [S1] stores the association between i) an authenticated software application (App) identity and a derivative of the identity of the user smart phone or multimedia device on which the software is installed App-ID1(HW-ID), and ii) the previously registered voter identity (User-A), such that whenever the software application communicates with the electoral registration office server [S1], the communication of only the said combined software and hardware identity App-ID1(HW-ID), uniquely identifies the true identity of the user (User-A).

It is a further aspect of one embodiment of the present invention to provide an improved system, method for electronic voting, wherein the electoral registration office server [S1] communicates with the software application (App) using an encrypted connection such that the unique combined software and hardware identity App-ID1(HW-ID) is only known to the electoral registration office server [S1] and may not be determined independently by a third party.

It is a further aspect of one embodiment of the present invention to provide an improved system, method for electronic voting, wherein a user registers an e-voting software application with an electoral registration office server [S1] according to the following steps of:
i) a user [User-A] who is pre-registered with an electoral registration office, downloads and installs an electronic voting e-voting software-App on their multimedia device,
ii) the e-voting software-App generates a unique combined software and hardware identity App-ID1(HW-ID),
iii) the user, who is already known to the Electoral Registration Office, registers with an electoral registration office server [S1] using the e-voting software application (App), wherein the software-App communicates user credentials such as the user identity [UserA-ID] and the unique combined software and hardware identity App-ID1(HW-ID), and the electoral registration office server [S1] stores App-ID1(HW-ID) for UserA-ID,
iv) the electoral registration office server [S1] responds by sending a status message back to User-A's e-voting software-App.

It is a further aspect of one embodiment of the present invention to provide an improved system and method for electronic voting, wherein a user requests registration to vote with an electronic election office server [S2] according to the following steps of:
i) the e-voting software-App communicates with the electronic election office server [S2] requesting registration for a particular election [Election-ID],
ii) the electronic election office server [S2] generates a random number [RAND] and selects one of a list of unique identity numbers [UID] and then stores [RAND] for [UID],
iii) the electronic election office server [S2] then sends RAND and UID, together with the particular election identity [Election-ID] back to the e-voting software-App,
iv) the e-voting software-App then stores UID for Election-ID,
v) the e-voting software-App then sends RAND with the election-ID to the electoral registration office server [S1],
vi) the electoral registration office server [S1] then checks two conditions:
   a. that UserA-ID is allowed to vote in the particular election [Election-ID], and
   b. that UserA-ID has not yet registered for Election-ID,
      and if both conditions are true, the electoral registration office server [S1] signs RAND with the electoral registration office server [S1] private key [Sig(RAND)], and sends Sig(RAND) back to User-A's e-voting software-App,
v) the e-voting software-App receives Sig(RAND) and then generates a new unique combined software and hardware identity App-ID2(HW-ID, Election-ID),
vi) the e-voting software-App sends Sig(RAND), UID, App-ID2(HW-ID, Election-ID), back to the electronic election office server [S2],
vii) the electronic election office server [S2] uses the public key of the electoral registration office server [S1] to check that Sig(RAND) decodes to give RAND, and if this condition is met, the electronic election office server [S2] deletes RAND and stores App-ID2(HW-ID, Election-ID) for UID.

It is a further aspect of one embodiment of the present invention to provide an improved system and method for electronic voting, wherein a user, who is registered to vote with the electronic election office server [S2], votes according to the following steps:
i) the electronic election office server [S2] sends candidate choices to the e-voting software-App of User-A,
ii) User-A makes a choice [Choice-ID] using the e-voting software-App,
iii) the e-voting software-App generates an encoded vote message [Vote(Choice-ID, App-ID2(HW-ID, Election-ID))], wherein the encoded message may use a keyed-hash function or other one-way mathematical function,
iv) the e-voting software-App then sends Vote(Choice-ID, App-ID2(HW-ID, Election-ID)) with UID to the electronic election office server [S2],
v) the electronic election office server [S2] checks with stored App-ID2(HW-ID, Election-ID) and UID, that UID has not already voted and that the vote is genuine, and if these conditions are true, the electronic election office server [S2] stores data indicating UID has voted, counts the vote for Choice-ID, and sends a message to the e-voting software-App of User-A, that the vote has been counted.

It is a further aspect of one embodiment of the present invention to provide an improved system and method for electronic voting wherein all communications between the e-voting software-App and the electoral registration office server [S1] and the electronic election office server [S2] are encrypted.

Other aspects and advantages of different embodiments of this invention will become apparent from the description to follow when read in conjunction with the accompanying drawings.

### BRIEF SUMMARY OF THE INVENTION

Certain of the foregoing and related aspects are readily-attained according to the present invention by the provision of a novel improved system, method and computer program for electronic voting, which serves to address the diverse requirements for providing a secure electronic voting solution using a software application running on a multimedia device, while maintaining: privacy of the personal identity of the voter from the electronic election office server [S2] , privacy of the physical identity of the smart phone or multimedia device from the electronic election office server [S2], and privacy of any details of the vote cast by the user from the electoral registration office server [S1].

The invention comprises substantial technical improvements over all prior art systems by providing an electronic e-voting software-App, which protects the identity of the voter from the electronic election office server [S2] by enabling the voter to register to vote and to cast their vote using a unique encoded identifier derived from the software-App and the multimedia platform, while providing a secure means for the electronic election office server [S2] to validate that the voter is genuine, is allowed to vote, has not registered for this election already, has not voted in this election already and that the voter's vote is genuine.

In different embodiments, the invention further creates a valuable and versatile solution to facilitate electronic voting for a diverse number of voting applications including national elections, local elections, media broadcast questions, cultural questions, product preferences, social questions, and the like.

Other objects and features of the present invention will become apparent from the following detailed description considered in connection with the accompanying drawings, which disclose several key embodiments of the invention. It is to be understood, however, that the drawings are designed for the purpose of illustration only and that the particular description of the invention in the context of voting in political elections is given by way of example only, to help highlight the advantages of the current invention and does not limit the scope of the invention.

### BRIEF DESCRIPTION OF THE DRAWINGS

**FIG. 1** illustrates a schematic showing one embodiment of the steps performed when an electronic voting software application is installed and registered with the electoral registration office server [S1].
**FIG. 2** illustrates a schematic showing one embodiment of the steps performed when a user requests registration to participate in an election using an e-voting software-App to communicate with an electronic election office server [S2].
**FIG. 3** illustrates a schematic showing one embodiment of the steps performed when a user votes using the e-voting software-App.

### DESCRIPTION OF A PREFERRED EMBODIMENT

Reference will now be made in detail to some specific embodiments of the invention including the best modes contemplated by the inventor for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover subject-matter as defined by the appended claims.

The following description makes full reference to the detailed features, which may form parts of different embodiments as outlined in the aspects of the invention. In the following example, reference is made to a user voting in a general election, while it will be obvious that the electronic voting invention is suitably applied to a wide range of voting applications, canvassing of public opinion, and marketing surveys about diverse products and services.

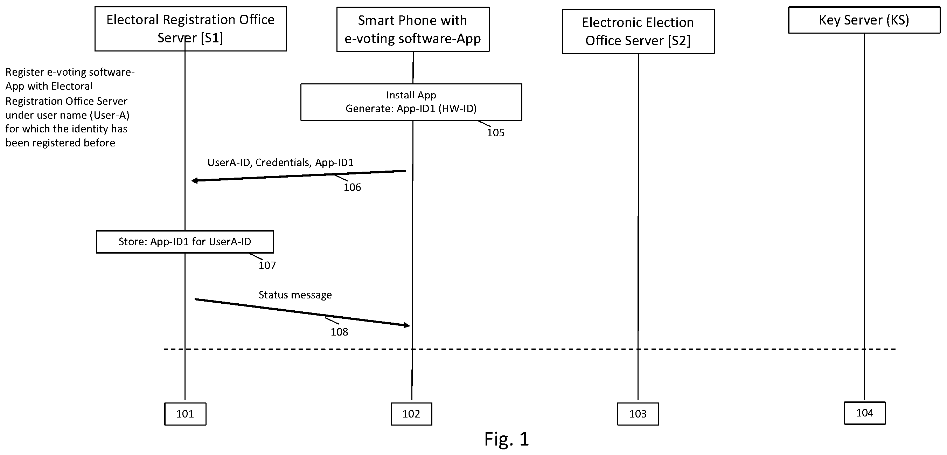

Referring now in detail to the drawings and in particular **FIG. 1** thereof, therein illustrated is a schematic of one part of the improved system, method and computer program for electronic voting as according to one embodiment of the invention.

After a user has legitimately registered with an electoral registration office, using a personal ID card or passport or authenticated personal identity of some type or an electronic authenticated identity, or wherein the user's identity (User-A) is stored via a national database of individuals and forwarded to an electoral registration office server [S1], their personal credentials are stored and exist on an electoral registration office server [S1] (101).

**FIG. 1** shows a logical layout of network elements and communication links between an electoral registration office server [S1] (101), a smart phone or multimedia device comprising an electronic voting software application (App) (102), an electronic election office server [S2] (103), and a public-encryption-key server (104) which provides the public key for legitimate users to decrypt files encoded with a private key.

To make use of the electronic voting process, a user with true identity (User-A) installs an electronic voting software application on their smart phone or multimedia device (102). Installation can be done using a one-time installation key or password, which cannot be used a second time such that the software application is locked to that smart phone. The software application (App) generates a unique software application identity App-ID1(HW-ID) (105), which in different embodiments may include a derivative of the smart phone hardware identity such as for example a derivative of the hardware MAC address, and or the chip ID. In this way, the software application identity (App-ID1) together with a derivative of the device identity (HW-ID), are uniquely identifiable as being associated with one unique user (User-A).

The App must now register with the electoral registration office server [S1] (101) and the App sends the true identity (User-A), which the user used originally to register with the age-verification server, which may include additional credentials, together with the unique software application identity [User-A, Credentials, App-ID1(HW-ID)] to the electoral registration office server [S1] (101) as an App registration request process (106).

The electoral registration office server [S1] (101) receives and processes the registration request (106) and verifies that User-A has registered originally with the electoral registration office, and then the unique software application identity App-ID1(HW-ID) is stored (107) linked to true identity User-A. The electoral registration office server [S1] (101) thus stores a relation between a uniquely identifiable user (User-A), an authenticated software application (App) and a uniquely identifiable smart phone or multimedia device using the unique software application identity App-ID1(HW-ID). In the electronic voting process, only the unique software application identity App-ID1(HW-ID) needs to be transmitted to the electoral registration office server [S1] (101) because it uniquely defines the user and the smart phone or multimedia device and installed e-voting software-App for a legitimate registered user. A status message is then sent back to the smart phone (108).

In different embodiments, the unique software application identity [User-A, App-ID1(HW-ID)] is sent in an encrypted form and is not ever accessible to 3^{rd} parties. Consequently, no user could ever successfully spoof the identity App-ID1(HW-ID) and thus fraudulently obtain a successful voter registration.

In different embodiments, the registration process provides a mechanism for the electoral registration office server [S1) (101) to investigate the integrity of the installed electronic voting software application to determine that it is authentic and genuine and has not been modified in any unauthorized way. To perform this integrity evaluation, the electoral registration office server [S1) (101) may send one or more encrypted communications comprising an App-challenge communication to the App which requires a specific App-response to be sent back to the age-verification server. If the age-verification server receives the correct App-response, the App is determined to be authenticated and genuine and unmodified. Periodically, the age-verification server may perform App integrity checks to determine if the software has been modified in any way.

In different embodiments, upon successful registration of the App with the electoral registration office server [S1] (101), acknowledgement messages, and or App software updates, and or new App features, may be sent back to the App.

In different embodiments, the e-voting software-App may periodically request data to verify that the true user is using the e-voting software-App, such that the App may request biometric input, such as a fingerprint scan, and or an iris scan, and or face recognition, and or answers to unique personal security questions, before access to the App, and or during use of the App.

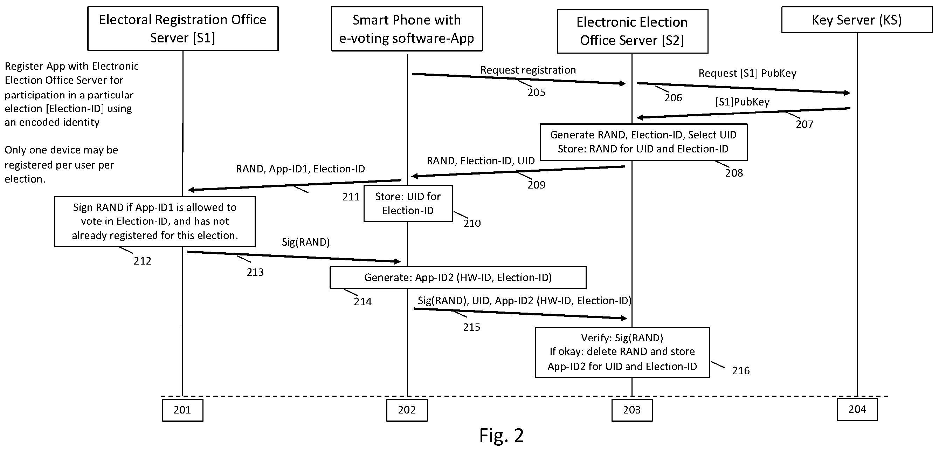

Referring now in detail to **FIG. 2****,** therein illustrated is a schematic of the steps performed when a user requests registration with an electronic election office server [S2] (203) to participate in an election using an e-voting software-App.

After the e-voting software-App has been installed on the user's smart phone or multimedia device (202), and successfully registered with an electoral registration office server [S1] (201), the user must register the App with an electronic election office server [S2] (203) for election with identity Election-ID, to be able to participate in that election [Election-ID]. Only one device with installed e-voting software-App may be registered per user per election.

As in Fig. 1, **FIG. 2** shows a logical layout of network elements and communication links between an electoral registration office server [S1] (201), a smart phone or multimedia device comprising an electronic voting software application (App) (202), an electronic election office server [S2] (203), and a public-encryption-key server (204) which provides the public key for legitimate users to decrypt files encoded with a private key.

To be allowed to participate in an election, a user uses his registered smart phone device (202) to request registration with an electronic election office server [S2] (203). The request need not include any identification of the requesting device. The electronic election office server [S2] (203) will make use of public key-private key encryption and at some time, the server S2 (203) requests (206) and receives (207) the public key ([S1]PubKey) of the electoral registration office server [S1] (201) from a Public Key Server (204). This request for the Public Key may take place once at any time.

To proceed with the election registration, the electronic election office server [S2] (203) generates a random number [RAND] and a unique identity number [UID], which it will attribute to the requesting smart phone with e-voting software-App. The electronic election office server [S2] (203) then creates an election identifier [Election-ID]. The electronic election office server [S2] (203) stores RAND for UID and for election identifier [Election-ID] (208).

The electronic election office server [S2] (203) then sends (RAND, Election-ID, UID) back (209) to the smart phone (202). The smart phone (202) then stores UID for Election-ID (210).

The smart phone with e-voting software App (202) then communicates with the electoral registration office server [S1) (201) sending (RAND, App-ID1, Election-ID) (211).

The electoral registration office server [S1) (201) then signs RAND with its private key if App-ID1 is allowed to vote in Election-ID and has not already registered for this election (212). The electoral registration office server [S1) (201) does not store RAND and then sends Sig(RAND) back to the smart phone with e-voting software-App (213). The smart phone e-voting software-App (202) then generates a new identity (App-ID2 (HW-ID, Election-ID) )214) and sends this together with Sig(RAND) and UID to the electronic election office server [S2] (215). Upon receipt, the electronic election office server verifies that Sig(RAND) decodes to give RAND using the public key of the electoral registration office server [S1](201), and if this is the case, it deletes RAND and stores App-ID2 for UID and Election-ID. In this way, the electronic election office server [S2] has created its own encoded identity for the requesting user to participate in a given election Election-ID.

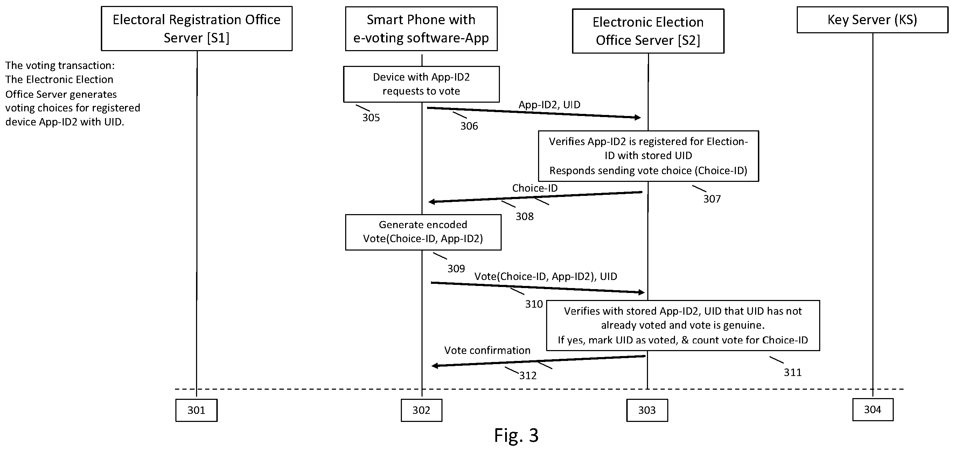

Referring now in detail to **FIG. 3****,** therein illustrated is a schematic of one step of the improved system, method and computer program for electronic voting as according to one embodiment of the invention. After the electronic voting software application (App) (302) has been successfully registered with the electronic election office server [S2] (303) the user may now proceed to request participation in a vote.

As in Fig. 1 and Fig. 2, **FIG. 3** shows a logical layout of network elements and communication links between an electoral registration office server [S1] (301), a smart phone or multimedia device comprising an electronic voting software application (App) (302), an electronic election office server [S2] (303), and a public-encryption-key server (304) which provides the public key for legitimate users to decrypt files encoded with a private key.

Following successful registration with the electronic election office server [S2] (303), the user requests to vote in Election-ID (305), wherein the e-voting software-App sends App-ID2 with the stored UID for Election-ID (306). The electronic election office server [S2] then verifies that App-ID2 is registered for Election-ID with stored UID (307). The server [S2] then responds by sending the vote choice (Choice-ID) (308) to the smart phone. The user votes by selecting a candidate from among Choice-ID. The e-voting software-App then creates an encoded message Vote(Choice-ID, App-ID2) (309) and this is sent to the electronic election office server [S2] (310).

The electronic election office server [S2] processes the received Vote(Choice-ID, App-ID2) and verifies that App-ID2 with UID has not already voted and the vote is genuine. If these conditions are true, the server [S2] records that UID has voted, and the vote is counted for choice-ID (311). A vote confirmation is then sent from the electronic election office server [S2] back to the user's smart phone or multimedia device with e-voting software-App.

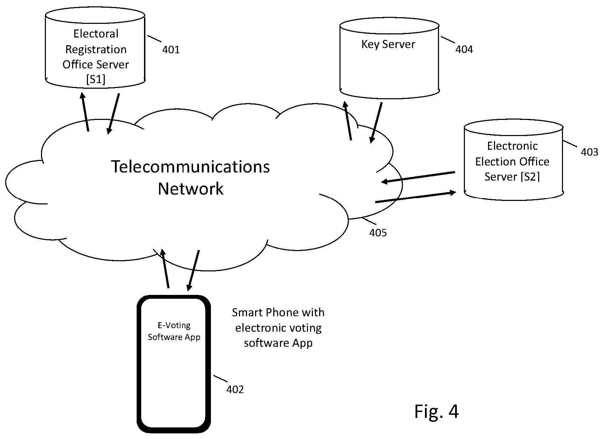

Referring now in detail to **FIG. 4****,** therein illustrated is a schematic of the physical layout of the improved system, method and computer program for electronic voting according to the preferred embodiment.

As in Figures 1 to 3, **FIG. 4** shows the physical layout of network elements and communication links between an electoral registration office server [S1] (401), a smart phone or multimedia device comprising an electronic voting software application (App) (402), an electronic election office server [S2] (403), and a public-encryption-key server (404) which provides the public key for legitimate users to decrypt files encoded with a private key.

For clarity, in the preferred embodiment, a smart phone is shown comprising a software application for e-voting. This comprises the authenticating device according to the invention in this embodiment. The authenticating device communicates with the electoral registration office server [S1] (401), the electronic election office server [S2] (403), and the Key Server (404) across the telecommunications network (405).

According to **FIG. 4****,** it can be understood that the smart phone (402) acts as a single subscriber communicating wirelessly over the telecommunications network (405). Updates to the authentication software App may be made wirelessly across the network and sent from the electoral registration office server. In different embodiments, updating the software may be done via a separate software update sent from an authenticated update server (not shown). Checking the integrity of the authenticating software App may be done directly by the electoral registration office server. In different embodiments, software integrity checking may be done via a separate software integrity checking server (not shown).

In particular, the invention has provided a safe and secure method for an anonymous voter to register for an election via an electronic election office server [S2] such that the electronic election office server [S2] is able to confirm that the voter is authenticated to vote in an election (Election-ID), while the App also determines that the electronic election office server [S2] is authentic and approved. The invention enables the electronic election office server [S2] to generate a random number and unique pseudo-identity UID for a requesting person with e-voting software identity App-ID2 (HW-ID, Election-ID) and to determine that UID is associated with a true legitimate voter, wherein the electronic election office server [S2] then stores the validated UID user identity together with the unique hardware identity and Election identity to enable the voter to participate in Election-ID. No personal identity data is received by the electronic election office server [S2] and thus the vote remains anonymous when cast.

In different embodiments, the App may provide the means for the voting transaction to be performed on a separate computer, and consequently, may request biometric input, such as fingerprint scan, and or iris scan, and or face recognition, and or answers to unique personal security questions, before or during the e-Voting process to continue to verify that the true authenticated user is voting, and thereby manage the voting transaction. In this way the voting transaction is restricted to the true registered voter who is in possession of the smart phone, upon which the App is installed.

In other embodiments, the voting transaction is performed via a voting website, which may present a QR-code on screen, which is a 2-dimensional bar code on the screen which the smart phone can capture and which is processed by the App. After processing the QR-code, the App computes an e-Voting login based upon a derivative of the unique hardware identity App-ID2(HW-ID) and UID. The QR-code is simply an alternative method to communicate the identity of the electronic election office server [S2] and to cause the App to generate the authenticated voter identity from App-ID2(HW-ID) and UID.

For clarification, there are several different scenarios possible regarding how the voter may perform the e-Voting transaction. The customer may vote using the authenticating device, i.e., a multimedia device, such as a smartphone, tablet etc., on which the e-Voting software app is installed. Alternatively, the customer may access and view the content on a second device, such as via a personal computer, after authentication has been performed on a first device, but this second device may also be a multimedia device, such as a smartphone, tablet etc. In the following part of the description, the device used for accessing and viewing the election candidates, which is different from the device used for authentication, is referred to as a display device.

The principles of the present invention are the same, whether the customer uses the authenticating device, or the display device, to access and view the content. There are however differences regarding the implementation of the data transfer from the authenticating device to the electronic election office server.

The electronic election office server [S2] may be implemented as a web server, which is configured to communicate with the display device and or the authenticating device. Alternatively, the electronic election office server [S2] may be implemented as a computer system with a network connection, such as a connection to the Internet, comprising a software system implementing its functionality. When accessing the electronic election office server [S2] using the authenticating device, the communication between the authenticating device and the electronic election office server [S2] may be done using a communications link, similar to the one, which was used to communicate with the electoral registration office server [S1]. All communication links established as part of the described method and system may be encrypted.

In the case where the e-Voting transaction, which involves presenting the candidates to be selected, is accessed and viewed using a display device, the authenticating device may establish a communications link to the electronic election office server [S2], which is separate from the link used by the display device to perform the e-Voting transaction. In addition, the information that the authenticating device needs to receive, may also be input differently, e.g. typed in by the authenticated e-Voter, or retrieved by scanning a bar code, preferably a 2D bar code, such as a QR Code. Information to authenticate the e-Voter that is to be sent to the electronic election office server [S2], may be displayed by the authenticating device, e.g. in the form of a PIN number, such as a numeric or alpha-numeric code of a particular length, e.g. 4 to 10 digits. Alternatively, the input may be a derivative of a much more complex code and further require biometric input from the e-Voter.

The invention thus provides a comprehensive solution to electronic voting using a registered smart phone or multimedia device with an electronic voting software application. While the preferred embodiment has emphasized the use of a smart phone, this is given by way of example only, and the invention is not limited to this type of device. All manner of multimedia devices may be used such as a laptop, a computer, an iPad, an iPhone, a tablet etc. It is to be understood that the aforementioned multimedia devices generally comprise: a data processing platform, a screen, computer memory, a fixed internet access communication capability and or a radio internet access communication capability, which may use any radio telecommunications standard, wherein the device comprises an antenna and radio telecommunications software and hardware, a data processing software and or the means to process image data such as QR-codes or other 2 dimensional barcodes, an operating system, and data encryption software and a data decryption software, a power supply, and all other common hardware and software functionality found in multimedia devices such as software capable of processing biometric data where it is needed according to different used embodiments of the invention.

In the context of the current invention, in a preferred embodiment, the electoral registration office server [S1] and the electronic election office server [S2] each comprises a computer capable of processing requests and delivering data to other computers and other wirelessly connected devices over the internet or over local networks. Each server may comprise a web server delivering web pages, which are capable of being accessed over the Internet using a web browser such as Internet Explorer, Chrome, Firefox, Opera, Safari, etc.

According to different embodiments, the electoral registration office server [S1] and the electronic election office server [S2] may each comprise a single server capable of processing many different operations, or each server [S1] and [S2] may comprise several servers each dedicated to different processing tasks such as voter registration, software updates, software integrity checking, personal identity checking, and authentication and encryption. Each server may also include functionality to upload and backup files online through a cloud storage system or via online backup services according to different use requirements.

Each server comprises both server hardware and server software, wherein the hardware needed is designed to support the number of server clients accessing the server software services.

In different embodiments, the server architecture may employ a client-server networking model integrating websites and communication services.

Different embodiments of the communications between the server [S1] and the server [S2] and the authenticating devices may also employ peer-to-peer networking functionality, wherein pluralities of devices on a network may function as either a server or a client on an as-needed basis. This offers a greater degree of privacy and may be used in low traffic instances.

Each server may also comprise a server cluster where computing resources are shared to maximize processing efficiency.

In a preferred embodiment, the information returned by the electoral registration server [S1] will be digitally signed using Public Key cryptography, also referred to as asymmetrical cryptography. In such a cryptographic system, pairs of keys are used, namely public keys, which may be disseminated widely, and private keys which are known only to the owner, such as PGP (Pretty Good Privacy) and the like. The public key is, for example, used to verify whether an electronic signature is authentic. The electronic election office server therefore needs to obtain the public key that corresponds to the private key used by the electoral registration office server. The electronic election office server may access a key server to retrieve the electoral registration office server's public key or it may retrieve it directly from the electoral registration office server. The electronic election office server may also store the electoral registration office server's public key for later use, so that it is not required by the electronic election office server to retrieve the key each time a new customer registers for an election.

As part of the election registration process, the authenticating device receives a number, referred to in the Figures as RAND, which is issued by the electronic election office server [S2]. This number (RAND) may be any binary sequence, or any binary sequence represented by any numeric or alpha numeric representation. Preferably, the number (RAND) is a random number, or based on a random number. The term *random number* may also include pseudo-random numbers, i.e. those generated from a sequence of numbers whose properties approximate the properties of sequences of random numbers.

The electronic election office server [S2] stores the number (RAND) and the unique identity number UID for later use, for example, in a database. Preferably, the electronic election office server [S2] is able to retrieve RAND and UID from the database with a query based on the customer's user name.

The current invention of an improved system, method and computer program for electronic voting based on anonymity, creates a very powerful business model which is suitable for rapid consumer marketing. The ease and versatility of providing real-time assessment of consumer's wishes offers a valuable marketing tool, which to date, is not available. Using the invention, a significant market survey can be conducted in a very short time at very low cost to gather an accurate picture of consumer feelings about product design and product price and the like. According to the invention, the identities of the voting users remain hidden and their private data is not transferred, and thus consumers will be more willing to participate with honesty. Marketing companies can offer immediate rewards for participation.

In different embodiments of the commercial application of the invention for market surveys of target groups, the implementation of the servers may be done differently. To make sure that market surveys are not invalidated by multiple voting, preventing consumers from skewing the data, it is also required that consumers may only vote once on any issue. Consequently, the devices will each need to be registered with a registration server to participate once for each marketing survey. This registration server may be implemented differently in a commercial application, such that the voting server software may be implemented on the same server as the registration server software.

The present invention may be implemented as a computer program for use in a multimedia device for implementing a method for registering an e-voting device (202) with an election server (203), the computer program comprising computer executable instructions that, when run on the multimedia device, cause the multimedia device to perform the following method:
Receiving a number (RAND) issued by said election server (203) and an election-ID;
Establishing a communications link to a registration server (201);
Sending said number (RAND), said election-ID and an identifier (App-ID1) to said registration server (201);
Receiving from said registration server (201) a digital signature (Sig(RAND)) of said number, the digital signature Sig(RAND)) being generated by said registration server (201), when said registration server (201) determines i) that said voter is allowed to vote in an election identified by said election-ID, and ii) that for said voter no e-voting device has already been registered for said election;
Sending said digital signature (Sig(RAND)) and a second identifier (App-ID2) to the election server (203), so that said e-voting device (202) can subsequently authenticate itself to said election server (203) based on said second identifier (App-ID2).

This change of implementation of the voting server software and registration server software forms different embodiments of the same invention. Consequently, for commercial use, the server software may be implemented as a single system.

For the purpose of the present invention as described herein above, and for clarification of terminology, the smart multimedia device, is an electronic device and, in the context of wireless networks and services, it can be termed user equipment. The user equipment multimedia device has the e-Voting App running on it, which is implemented as a software program. This program can be written in any known programing language, such as C++, Java, Python, C#, PHP etc., where the program comprises software algorithms and method steps. The user equipment multimedia devices comprise circuitry and one or more processors. The user equipment multimedia devices access fixed or wireless networks using access technology.

For further clarification,
circuitry may refer to at least one of, or hybrids of the following:
   (a) pure hardware circuit implementations (such as implementations purely in analog and/or digital circuitry), and
   (b) combinations of circuits and software (and/or firmware), such as (as applicable):
      (i) a combination of processor(s), or
      (ii) portions of processor(s)/software (including digital signal processor(s)), software and memory (or memories) that work together to cause an apparatus as defined hereinabove to perform various functions, and
   (c) to circuits, such as (micro)processor(s) or a portion of (a) (micro)processor(s) that require software and/or firmware for operation even if the software or firmware is not physically present;
a processor may be any processing unit, such as CPU, arithmetic and logic unit (ALU), microprocessor unit (MPU), digital signal processor (DSP) etc., be it a single core processor, dual core processor or multi-core processor;
a program may be embodied by, or on any computer program (product), computer readable medium, processor(s), memory (or memories), circuitry, circuits, random access memory (RAM), read-only memory (ROM) and/or data structure(s), be it e.g. as compiled/non-compiled program (source) code, executable object, (meta)file or the like;
an access technology may be any technology by means of which a user equipment can access an access network (or base station, respectively). Any present or future technology, such as WiMAX (Worldwide Interoperability for Microwave Access) or WLAN (Wireless Local area Network), Bluetooth, Infrared, and the like may be used; although the above technologies are mostly wireless access technologies, e.g. in different radio spectra, access technology in the sense of the present invention may also imply wire bound technologies, e.g. IP based access technologies like cable networks or fixed line.
a network may be any device, unit or means by which a station entity or other user equipment may connect to and/or utilize services offered by the access network; such services include, among others, data and/or (audio-) visual communication, data download etc.;
generally, the present invention may be applicable in those network/user equipment environments relying on a data packet-based transmission scheme according to which data are transmitted in data packets and which are, for example, based on the internet protocol (IP). The present invention is, however, not limited thereto, and any other present or future IP or mobile IP (MIP) version, or, more generally, a protocol following similar principles as (M)IPv4/6, is also applicable;
a user equipment may be any device, unit or means by which a system user may experience services from an access network;
method steps likely to be implemented as software code portions and being run using a processor at a network element or terminal (as examples of devices, apparatuses and/or modules thereof, or as examples of entities including apparatuses, circuitries and/or modules therefore), are software code independent and can be specified using any known or future developed programming language as long as the functionality defined by the method steps is preserved;
generally, any method step is suitable to be implemented as software or by hardware without changing the idea of the invention in terms of the functionality implemented;
method steps and/or devices, units or means likely to be implemented as hardware components at the above-defined apparatuses, or any module(s)/circuitry(ies) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g. of authentication, authorization, keying and/or traffic protection;
devices, units, circuitries or means (e.g. the above-defined apparatuses, or any one of their respective means) can be implemented as individual devices, units or means, but this does not exclude that they are implemented in a distributed fashion throughout the system, as long as the functionality of the device, unit. circuitry or means is preserved;
a device may be regarded as an apparatus or as an assembly of more than one apparatus, whether functionally in cooperation with each other or functionally independently of each other but in a same.
an apparatus may be represented by a semiconductor chip, a chipset, a (hardware) module comprising such chip or chipset, or circuitry; this, however, does not exclude the possibility that a functionality of an apparatus, module or circuitry, instead of being hardware implemented, be implemented as software in a (software) module such as a computer program or a computer program comprising executable software code portions for execution/being run on a processor;
While only several embodiments of the present invention have been described in detail, it will be obvious to those persons of ordinary skill in the art that many changes and modifications may be made thereunto within the scope of the appended claims.

## Claims

1. A method performed by an e-voting device (202) registered for a voter, a registration server (201) for registering said e-voting device (202), an election server (203), and a key server (204), the method comprising the steps:
said election server (203) requesting (206) and receiving (207) the public key ([S1]PubKey) of said registration server (201) from said key server (204);
said e-voting device (202) requesting registration (205) with said election server (203);
said election server (203) issuing (208) a number (RAND) and a unique identity number (UID) and sending (209) it to the e-voting device (202) together with an election-ID and storing (208) said number (RAND) for said unique identity number (UID) and said election-ID;
said e-voting device (202) receiving said number (RAND) and said unique identity number (UID) issued by said election server (203) and said election-ID, and storing (210) said unique identity number (UID) for said election-ID;
said e-voting device (202) establishing a communications link to a registration server (201) and
sending (211) said number (RAND), said election-ID and an identifier (App-ID1) to said registration server (201);
said registration server (201) generating (212) a digital signature (Sig(RAND)) of said number using its private key, when said registration server (201) determines
i) that said voter is allowed to vote in an election identified by said election-ID, and
ii) that for said voter no e-voting device has already been registered for said election;
and sending (213) said digital signature (Sig(RAND)) to said e-voting device (202);
said e-voting device receiving from said registration server (201) said digital signature (Sig(RAND)) and generating (214) a second identifier (App-ID2);
sending (215) said digital signature (Sig(RAND)) and a second identifier (App-ID2) to said election server (203), so that said e-voting device (202) can subsequently authenticate itself to said election server (203) based on said second identifier (App-ID2);
said election server (203) verifying (216) that said digital signature (Sig(RAND)) is a digital signature of said number (RAND) using said public key ([S1]PubKey) of said registration server (201), and if this is the case, storing said second identifier (App-ID2) for said unique identity number (UID) and said election-ID.

2. The method according to claim 1, further comprising the steps of said e-voting device (202) generating said identifier (App-ID1).

3. The method according to one of the claims 1 or 2, further comprises after the step of said election server (203) storing said second identifier (App-ID2) for said unique identity number (UID) and said election-ID, the following steps:
said e-voting device (202) requesting to vote by sending (306) said second identifier (App-ID2) and said unique identity number (UID) to said election server (203);
said election server (203) verifying (307) whether said second identifier (App-ID2) is registered for said election-ID with said stored unique identity number (UID);
if this is the case, said election server sending (308) a choice-ID to said e-voting device (202);
said e-voting device receiving said choice-ID and generating (309) an electronic vote (Vote) based on said second identifier (App-ID2) and said choice-ID and sending (310) said electronic vote to said election server;
said election server (203) receiving an electronic vote (Vote) based on a choice-ID and said second identifier (App-ID2) and checking (311) whether the vote is genuine, and if so, counting the vote for choice-ID and marking said unique ID (UID) as having voted.

4. The method according to one of the preceding claims, wherein said e-voting device (202) is one of: a fixed computer device, a laptop computer, a mobile phone, a multimedia device, a tablet, an iPad, an iPhone, and wherein said e-voting device comprises an installed e-voting software app, and wherein the step of establishing a communications link to the registration server (201) includes the step of verifying the integrity of said e-voting software app by said registration server.

5. The method according to one of the preceding claims, wherein said number (RAND) is a random or pseudo-random number.

6. The method according to one of the preceding claims, wherein said e-voting device (202) has a hardware ID and wherein said identifier (App-ID1) and or said second identifier (App-ID2) is based on said hardware ID.

7. The method according to claim one of the preceding claims, wherein said second identifier (App-ID2) is further based on said election-ID.

8. A system for e-voting comprising an e-voting device (202) registered for a voter, a registration server (201) for registering said e-voting device (202), an election server (203), and a key server (204), wherein:
said election server (203) is configured to request (206) and to receive (207) the public key ([S1]PubKey) of said registration server (201) from said key server (204);
said e-voting device (202) is configured to request registration (205) with said election server (203);
said election server (203) is configured to issue a number (RAND) and a unique identity number (UID) and to send it to the e-voting device (202) together with an election-ID and to store said number (RAND) for said unique identity number (UID) and said election-ID;
said e-voting device (202) is configured to receive said number (RAND) and said unique identity number (UID) issued by said election server (203) and said election-ID, and to store (210) said unique identity number (UID) for said election-ID;
Said e-voting device (202) is configured to establish a communications link to a registration server (201) and
to send said number (RAND), said election-ID and an identifier (App-ID1) to said registration server (201);
Said registration server (201) is configured to generate a digital signature (Sig(RAND)) of said number with its private key, when said registration server (201) determines
i) that said voter is allowed to vote in an election identified by said election-ID, and
ii) that for said voter no e-voting device has already been registered for said election;
and to send said digital signature (Sig(RAND)) to said e-voting device (202);
said e-voting device is configured to receive from said registration server (201) said digital signature (Sig(RAND)) and to generate (214) a second identifier (App-ID2);
to send said digital signature (Sig(RAND)) and a second identifier (App-ID2) to said election server (203), so that said e-voting device (202) can subsequently authenticate itself to said election server (203) based on said second identifier (App-ID2);
said election server (203) is configured to verify (216) that said digital signature (Sig(RAND)) is a digital signature of said number (RAND) using said public key ([S1]PubKey) of said registration server (201), and if this is the case, to store said second identifier (App-ID2) for said unique identity number (UID) and said election-ID.

## Patentansprüche

1. Verfahren, das von einer für einen Wähler registrierten E-Voting-Vorrichtung (202), einem Registrierungsserver (201) zur Registrierung der E-Voting-Vorrichtung (202), einem Wahlserver (203) und einem Schlüsselserver (204) durchgeführt wird, wobei das Verfahren folgende Schritte umfasst:
- Der Wahlserver (203) fordert (206) und empfängt (207) den öffentlichen Schlüssel ([S1]PubKey) des Registrierungsservers (201) vom Schlüsselserver (204);
- Die E-Voting-Vorrichtung (202) fordert die Registrierung (205) beim Wahlserver (203) an;
- Der Wahlserver (203) gibt eine Nummer (RAND) und eine eindeutige Identifikationsnummer (UID) aus (208) und sendet (209) diese zusammen mit einer Wahl-ID an die E-Voting-Vorrichtung (202) und speichert (208) die Nummer (RAND) für die eindeutige Identifikationsnummer (UID) und die Wahl-ID;
- Die E-Voting-Vorrichtung (202) empfängt die Nummer (RAND) und die eindeutige Identifikationsnummer (UID), die vom Wahlserver (203) ausgegeben wurden, sowie die Wahl-ID und speichert (210) die eindeutige Identifikationsnummer (UID) für die Wahl-ID;
- Die E-Voting-Vorrichtung (202) stellt eine Kommunikationsverbindung zu einem Registrierungsserver (201) her und sendet (211) die Nummer (RAND), die Wahl-ID und einen Identifikator (App-ID1) an den Registrierungsserver (201);
- Der Registrierungsserver (201) erzeugt (212) eine digitale Signatur (Sig(RAND)) der Nummer unter Verwendung seines privaten Schlüssels, wenn der Registrierungsserver (201) feststellt,
i) dass der Wähler berechtigt ist, an einer durch die Wahl-ID identifizierten Wahl teilzunehmen, und
ii) dass für den Wähler noch keine E-Voting-Vorrichtung für die Wahl registriert wurde;
und sendet (213) die digitale Signatur (Sig(RAND)) an die E-Voting-Vorrichtung (202);
- Die E-Voting-Vorrichtung empfängt vom Registrierungsserver (201) die digitale Signatur (Sig(RAND)) und erzeugt (214) einen zweiten Identifikator (App-ID2);
- Sie sendet (215) die digitale Signatur (Sig(RAND)) und den zweiten Identifikator (App-ID2) an den Wahlserver (203), sodass sich die E-Voting-Vorrichtung (202) anschließend beim Wahlserver (203) anhand des zweiten Identifikators (App-ID2) authentifizieren kann;
- Der Wahlserver (203) prüft (216), ob die digitale Signatur (Sig(RAND)) eine digitale Signatur der Nummer (RAND) unter Verwendung des öffentlichen Schlüssels ([S1]PubKey) des Registrierungsservers (201) ist, und speichert, falls dies der Fall ist, den zweiten Identifikator (App-ID2) für die eindeutige Identifikationsnummer (UID) und die Wahl-ID.

2. Verfahren nach Anspruch 1, ferner umfassend den Schritt, dass die E-Voting-Vorrichtung (202) den Identifikator (App-ID1) erzeugt.

3. Verfahren nach einem der Ansprüche 1 oder 2, ferner umfassend nach dem Schritt, dass der Wahlserver (203) den zweiten Identifikator (App-ID2) für die eindeutige Identifikationsnummer (UID) und die Wahl-ID speichert, folgende Schritte:
- Die E-Voting-Vorrichtung (202) fordert die Stimmabgabe an, indem sie (306) den zweiten Identifikator (App-ID2) und die eindeutige Identifikationsnummer (UID) an den Wahlserver (203) sendet;
- Der Wahlserver (203) prüft (307), ob der zweite Identifikator (App-ID2) für die Wahl-ID mit der gespeicherten eindeutigen Identifikationsnummer (UID) registriert ist;
- Falls dies der Fall ist, sendet der Wahlserver (308) eine Choice-ID an die E-Voting-Vorrichtung (202);
- Die E-Voting-Vorrichtung empfängt die Choice-ID und erzeugt (309) eine elektronische Stimme (Vote) basierend auf dem zweiten Identifikator (App-ID2) und der Choice-ID und sendet (310) die elektronische Stimme an den Wahlserver;
- Der Wahlserver (203) empfängt eine elektronische Stimme (Vote) basierend auf einer Choice-ID und dem zweiten Identifikator (App-ID2) und prüft (311), ob die Stimme echt ist, und zählt, falls dies zutrifft, die Stimme für die Choice-ID und markiert die eindeutige ID (UID) als gewählt.

4. Verfahren nach einem der vorhergehenden Ansprüche, wobei die E-Voting-Vorrichtung (202) eine der folgenden ist: ein stationäres Computergerät, ein Laptop-Computer, ein Mobiltelefon, ein Multimediagerät, ein Tablet, ein iPad, ein iPhone, und wobei die E-Voting-Vorrichtung eine installierte E-Voting-Software-App umfasst, und wobei der Schritt des Aufbaus einer Kommunikationsverbindung zum Registrierungsserver (201) den Schritt umfasst, dass die Integrität der E-Voting-Software-App durch den Registrierungsserver überprüft wird.

5. Verfahren nach einem der vorhergehenden Ansprüche, wobei die Nummer (RAND) eine Zufallszahl oder Pseudozufallszahl ist.

6. Verfahren nach einem der vorhergehenden Ansprüche, wobei die E-Voting-Vorrichtung (202) eine Hardware-ID aufweist und wobei der Identifikator (App-ID1) und/oder der zweite Identifikator (App-ID2) auf der Hardware-ID basiert.

7. Verfahren nach einem der vorhergehenden Ansprüche, wobei der zweite Identifikator (App-ID2) ferner auf der Wahl-ID basiert.

8. System zum elektronischen Wählen, umfassend eine für einen Wähler registrierte E-Voting-Vorrichtung (202), einen Registrierungsserver (201) zur Registrierung der E-Voting-Vorrichtung (202), einen Wahlserver (203) und einen Schlüsselserver (204), wobei:
- Der Wahlserver (203) so konfiguriert ist, dass er (206) den öffentlichen Schlüssel ([S1]PubKey) des Registrierungsservers (201) vom Schlüsselserver (204) anfordert und (207) empfängt;
- Die E-Voting-Vorrichtung (202) so konfiguriert ist, dass sie die Registrierung (205) beim Wahlserver (203) anfordert;
- Der Wahlserver (203) so konfiguriert ist, dass er eine Nummer (RAND) und eine eindeutige Identifikationsnummer (UID) ausgibt und diese zusammen mit einer Wahl-ID an die E-Voting-Vorrichtung (202) sendet und die Nummer (RAND) für die eindeutige Identifikationsnummer (UID) und die Wahl-ID speichert;
- Die E-Voting-Vorrichtung (202) so konfiguriert ist, dass sie die Nummer (RAND) und die eindeutige Identifikationsnummer (UID), die vom Wahlserver (203) ausgegeben wurden, sowie die Wahl-ID empfängt und (210) die eindeutige Identifikationsnummer (UID) für die Wahl-ID speichert;
- Die E-Voting-Vorrichtung (202) so konfiguriert ist, dass sie eine Kommunikationsverbindung zu einem Registrierungsserver (201) herstellt und die Nummer (RAND), die Wahl-ID und einen Identifikator (App-ID1) an den Registrierungsserver (201) sendet;
- Der Registrierungsserver (201) so konfiguriert ist, dass er eine digitale Signatur (Sig(RAND)) der Nummer unter Verwendung seines privaten Schlüssels erzeugt, wenn der Registrierungsserver (201) feststellt,
i) dass der Wähler berechtigt ist, an einer durch die Wahl-ID identifizierten Wahl teilzunehmen, und
ii) dass für den Wähler noch keine E-Voting-Vorrichtung für die Wahl registriert wurde;
und die digitale Signatur (Sig(RAND)) an die E-Voting-Vorrichtung (202) sendet;
- Die E-Voting-Vorrichtung ist so konfiguriert, dass sie vom Registrierungsserver (201) die digitale Signatur (Sig(RAND)) empfängt und (214) einen zweiten Identifikator (App-ID2) erzeugt;
- um die digitale Signatur (Sig(RAND)) und den zweiten Identifikator (App-ID2) an den Wahlserver (203) zu senden, sodass sich die E-Voting-Vorrichtung (202) anschließend beim Wahlserver (203) anhand des zweiten Identifikators (App-ID2) authentifizieren kann;
- Der Wahlserver (203) ist so konfiguriert, dass er (216) prüft, ob die digitale Signatur (Sig(RAND)) eine digitale Signatur der Nummer (RAND) unter Verwendung des öffentlichen Schlüssels ([S1]PubKey) des Registrierungsservers (201) ist, und, falls dies der Fall ist, den zweiten Identifikator (App-ID2) für die eindeutige Identifikationsnummer (UID) und die Wahl-ID speichert.

## Revendications

1. Procédé mis en œuvre par un dispositif de vote électronique (202) enregistré pour un électeur, un serveur d'enregistrement (201) pour enregistrer ledit dispositif de vote électronique (202), un serveur d'élection (203), et un serveur de clés (204), le procédé comprenant les étapes suivantes :
ledit serveur d'élection (203) demande (206) et reçoit (207) la clé publique ([S1]PubKey) dudit serveur d'enregistrement (201) auprès dudit serveur de clés (204) ;
ledit dispositif de vote électronique (202) demande l'enregistrement (205) auprès dudit serveur d'élection (203) ;
ledit serveur d'élection (203) attribue (208) un nombre (RAND) et un numéro d'identité unique (UID) et les envoie (209) au dispositif de vote électronique (202) avec un identifiant d'élection (élection-ID), et stocke (208) ledit nombre (RAND) pour ledit numéro d'identité unique (UID) et ledit identifiant d'élection ;
ledit dispositif de vote électronique (202) reçoit ledit nombre (RAND) et ledit numéro d'identité unique (UID) attribués par ledit serveur d'élection (203) ainsi que ledit identifiant d'élection, et stocke (210) ledit numéro d'identité unique (UID) pour ledit identifiant d'élection ;
ledit dispositif de vote électronique (202) établit un lien de communication avec un serveur d'enregistrement (201) et
envoie (211) ledit nombre (RAND), ledit identifiant d'élection et un identifiant (App-ID1) audit serveur d'enregistrement (201) ;
ledit serveur d'enregistrement (201) génère (212) une signature numérique (Sig(RAND)) dudit nombre à l'aide de sa clé privée, lorsque ledit serveur d'enregistrement (201) détermine
i) que ledit électeur est autorisé à voter dans une élection identifiée par ledit identifiant d'élection, et
ii) qu'aucun dispositif de vote électronique n'a déjà été enregistré pour ledit électeur pour ladite élection ;
et envoie (213) ladite signature numérique (Sig(RAND)) audit dispositif de vote électronique (202) ;
ledit dispositif de vote électronique reçoit du serveur d'enregistrement (201) ladite signature numérique (Sig(RAND)) et génère (214) un second identifiant (App-ID2) ;
envoie (215) ladite signature numérique (Sig(RAND)) et un second identifiant (App-ID2) audit serveur d'élection (203), de sorte que ledit dispositif de vote électronique (202) puisse ensuite s'authentifier auprès dudit serveur d'élection (203) sur la base dudit second identifiant (App-ID2) ;
ledit serveur d'élection (203) vérifie (216) que ladite signature numérique (Sig(RAND)) est une signature numérique dudit nombre (RAND) à l'aide de ladite clé publique ([S1]PubKey) dudit serveur d'enregistrement (201), et, si tel est le cas, stocke ledit second identifiant (App-ID2) pour ledit numéro d'identité unique (UID) et ledit identifiant d'élection.

2. Le procédé selon la revendication 1, comprenant en outre les étapes où ledit dispositif de vote électronique (202) génère ledit identifiant (App-ID1).

3. Le procédé selon l'une quelconque des revendications 1 ou 2, comprenant en outre, après l'étape où ledit serveur d'élection (203) stocke ledit second identifiant (App-ID2) pour ledit numéro d'identité unique (UID) et ledit identifiant d'élection, les étapes suivantes :
ledit dispositif de vote électronique (202) demande à voter en envoyant (306) ledit second identifiant (App-ID2) et ledit numéro d'identité unique (UID) audit serveur d'élection (203) ;
ledit serveur d'élection (203) vérifie (307) si ledit second identifiant (App-ID2) est enregistré pour ledit identifiant d'élection avec ledit numéro d'identité unique (UID) stocké ;
si tel est le cas, ledit serveur d'élection envoie (308) un identifiant de choix (choice-ID) audit dispositif de vote électronique (202) ;
ledit dispositif de vote électronique reçoit ledit identifiant de choix et génère (309) un vote électronique (Vote) sur la base dudit second identifiant (App-ID2) et dudit identifiant de choix, et envoie (310) ledit vote électronique audit serveur d'élection ;
ledit serveur d'élection (203) reçoit un vote électronique (Vote) sur la base d'un identifiant de choix et dudit second identifiant (App-ID2) et vérifie (311) si le vote est authentique, et, dans l'affirmative, comptabilise le vote pour l'identifiant de choix et marque ledit numéro d'identité unique (UID) comme ayant voté.

4. Le procédé selon l'une quelconque des revendications précédentes, dans lequel ledit dispositif de vote électronique (202) est l'un des suivants : un dispositif informatique fixe, un ordinateur portable, un téléphone mobile, un dispositif multimédia, une tablette, un iPad, un iPhone, et dans lequel ledit dispositif de vote électronique comprend une application logicielle de vote électronique installée, et dans lequel l'étape d'établissement d'un lien de communication avec le serveur d'enregistrement (201) comprend l'étape de vérification de l'intégrité de ladite application logicielle de vote électronique par ledit serveur d'enregistrement.

5. Le procédé selon l'une quelconque des revendications précédentes, dans lequel ledit nombre (RAND) est un nombre aléatoire ou pseudo-aléatoire.

6. Le procédé selon l'une quelconque des revendications précédentes, dans lequel ledit dispositif de vote électronique (202) possède un identifiant matériel (hardware ID) et dans lequel ledit identifiant (App-ID1) et/ou ledit second identifiant (App-ID2) est basé sur ledit identifiant matériel.

7. Le procédé selon l'une quelconque des revendications précédentes, dans lequel ledit second identifiant (App-ID2) est en outre basé sur ledit identifiant d'élection (élection-ID).

8. Système de vote électronique comprenant un dispositif de vote électronique (202) enregistré pour un électeur, un serveur d'enregistrement (201) pour enregistrer ledit dispositif de vote électronique (202), un serveur d'élection (203), et un serveur de clés (204), dans lequel :
ledit serveur d'élection (203) est configuré pour demander (206) et recevoir (207) la clé publique ([S1]PubKey) dudit serveur d'enregistrement (201) auprès dudit serveur de clés (204) ;
ledit dispositif de vote électronique (202) est configuré pour demander l'enregistrement (205) auprès dudit serveur d'élection (203) ;
ledit serveur d'élection (203) est configuré pour attribuer un nombre (RAND) et un numéro d'identité unique (UID) et pour les envoyer au dispositif de vote électronique (202) avec un identifiant d'élection (élection-ID) et pour stocker ledit nombre (RAND) pour ledit numéro d'identité unique (UID) et ledit identifiant d'élection ;
ledit dispositif de vote électronique (202) est configuré pour recevoir ledit nombre (RAND) et ledit numéro d'identité unique (UID) attribués par ledit serveur d'élection (203) ainsi que ledit identifiant d'élection, et pour stocker (210) ledit numéro d'identité unique (UID) pour ledit identifiant d'élection ;
ledit dispositif de vote électronique (202) est configuré pour établir un lien de communication avec un serveur d'enregistrement (201) et
pour envoyer ledit nombre (RAND), ledit identifiant d'élection et un identifiant (App-ID1) audit serveur d'enregistrement (201) ;
ledit serveur d'enregistrement (201) est configuré pour générer une signature numérique (Sig(RAND)) dudit nombre à l'aide de sa clé privée, lorsque ledit serveur d'enregistrement (201) détermine
i) que ledit électeur est autorisé à voter dans une élection identifiée par ledit identifiant d'élection, et
ii) qu'aucun dispositif de vote électronique n'a déjà été enregistré pour ledit électeur pour ladite élection ;
et pour envoyer ladite signature numérique (Sig(RAND)) audit dispositif de vote électronique (202) ;
ledit dispositif de vote électronique est configuré pour recevoir du serveur d'enregistrement (201) ladite signature numérique (Sig(RAND)) et pour générer (214) un second identifiant (App-ID2) ;
pour envoyer ladite signature numérique (Sig(RAND)) et un second identifiant (App-ID2) audit serveur d'élection (203), de sorte que ledit dispositif de vote électronique (202) puisse ensuite s'authentifier auprès dudit serveur d'élection (203) sur la base dudit second identifiant (App-ID2) ;
ledit serveur d'élection (203) est configuré pour vérifier (216) que ladite signature numérique (Sig(RAND)) est une signature numérique dudit nombre (RAND) à l'aide de ladite clé publique ([S1]PubKey) dudit serveur d'enregistrement (201), et, si tel est le cas, pour stocker ledit second identifiant (App-ID2) pour ledit numéro d'identité unique (UID) et ledit identifiant d'élection.
